# EUROPÄISCHE PATENTANMELDUNG

(11) **EP 2 631 593 A1**
(43) Veröffentlichungstag der Anmeldung: **28.08.2013**
(21) Anmeldenummer: 12001256.2
(22) Anmeldetag: 24.02.2012
(51) Int. Cl.: G01B 11/30, G01N 21/95

(54) **Verfahren zur Bestimmung von Oberflächendefekten einer ebenen Oberfläche**

(71) Anmelder: Fraunhofer Gesellschaft zur Förderung der angewandten Wissenschaft E.V., 80686 München (DE)
(72) Erfinder: Lazareva, Irina, Dr., 91056 Erlangen (DE); Nutsch, Andreas, Dr., 90425 Nürnberg (DE)
(74) Vertreter: Gagel, Roland

(57) **Zusammenfassung**

Die vorliegende Erfindung betrifft ein Verfahren zur Bestimmung von Oberflächendefekten einer ebenen Oberfläche, bei dem die Oberfläche mit einer ebenen Wellenfront beleuchtet und ein Bild der von der Oberfläche reflektierten Wellenfront aufgezeichnet wird. Die Oberflächeneffekte werden durch eine Analyse der Intensitätsverteilung des aufgezeichneten Bildes bestimmt, wobei lediglich helle Flächen im Bild detektiert und ausgewertet werden. Für die Detektion der hellen Flächen werden beim vorgeschlagenen Verfahren Intensitätsprofile in zwei Dimensionen des Bildes ausgewertet. Mit dem vorgeschlagenen Verfahren lässt sich eine hohe laterale Auflösung bei der Bestimmung der Oberflächendefekte mit geringer Rechenzeit erreichen.

## Beschreibung

### Technisches Anwendungsgebiet

Die vorliegende Erfindung betrifft ein Verfahren zur Bestimmung von Oberflächendefekten einer ebenen Oberfläche, bei dem die Oberfläche mit einer ebenen Wellenfront beleuchtet und ein Bild der von der Oberfläche reflektierten Wellenfront aufgezeichnet wird, und bei dem die Oberflächendefekte durch Analyse einer Intensitätsverteilung des aufgezeichneten Bildes bestimmt werden, wobei bei der Analyse der Intensitätsverteilung lediglich helle Flächen im Bild detektiert und ausgewertet werden. Ein derartiges Verfahren lässt sich bspw. für die Messung der Topographie einer ebenen polierten Oberfläche einsetzen, bspw. eines polierten Wafers in der Halbleitertechnologie.

Zur Bestimmung der Topographie einer reflektierenden Probenoberfläche ist es bekannt, ebene Wellenfronten einzusetzen. Die reflektierende Probenoberfläche wird dabei mittels der ebenen Wellenfront beleuchtet und der an der Probenoberfläche reflektierte Strahl analysiert. Das reflektierte Licht wird mittels einer CCD-Kamera als sog. Makyoh-Bild abgespeichert. Die Topographiebestimmung kann hierbei mit zwei unterschiedlichen Methoden durchgeführt werden. Bei der Topographiebestimmung aus der Verzerrung eines Bildes wird eine Maske im Strahlengang eingesetzt, die die Wellenfront in eine Vielzahl separater Lichtstrahlen aufteilt. Hierbei wird ein Lichtstrahl pro Maskenzelle angenommen. Anschließend erfolgt die Analyse der einzelnen Strahlen. Bei der weiteren Methode erfolgt die Topographiebestimmung anhand der Analyse der Intensitätsverteilung der reflektierten Wellenfront. Dabei wird die Intensitätsverteilung des abgespeicherten Makyoh-Bildes analysiert.

Die Topographiebestimmung aus der Intensitätsverteilung des Makyoh-Bildes ist von der Zellengröße einer Maske unabhängig. Diese Methode zeigt eine bessere laterale Auflösung und ermöglicht daher die Bestimmung von Kenngrößen von Defekten auf der Oberfläche, wie bspw. Durchmesser und Tiefe oder Höhe. Die laterale Auflösung liegt bei maximal 50 µm, begrenzt durch die Auflösung aktueller CCD-Kameras. Die sehr hohe Informationsdichte der Makyoh-Bilder erschwert allerdings die Berechnung der Topographie mittels Lichtintensitäten.

### Stand der Technik

Aus Z. J. Laczik, "Quantitative Makyoh Topography", Opt. Eng. 39 (9), September 2000, Seiten 2562 bis 2567, ist eine Vorgehensweise bekannt, bei der die Veränderung der Phase aus zwei Makyoh-Bildern mit verschiedenen Bild-Kamera-Abständen ermittelt wird. Aus der Änderung der Phase und den bekannten Abständen wird dann die Topographie der Probenoberfläche berechnet. Diese Technik ist aufgrund der hohen Informationsdichte der Makyoh-Bilder sehr aufwendig und benötigt viel Zeit, da alle Pixel der Makyoh-Bilder in die Berechnung eingehen. Eine Reduzierung der für die Berechnung herangezogenen Bildpunkte, bspw. durch Betrachtung nur jedes zweiten Bildpunktes, führt zur proportionalen Senkung der lateralen Auflösung.

Aus E. Lazareva et al., "Optical Inspection of Flat Reflective Surfaces by a Wave Front Sensor", Reflection, Scattering, and Diffraction from Surfaces II, edited by Zu-Han Gu, Leonard M. Hanssen, Proc. of SPIE 2010, Vol. 7792, Seiten 77920Q-1 bis 77920Q-8 ist ein Verfahren zur Bestimmung von Oberflächendefekten einer ebenen Oberfläche gemäß dem Oberbegriff des vorliegenden Patentanspruches 1 bekannt. Bei diesem Verfahren wird für die Analyse des Makyoh-Bildes nur ein Teil der Bildpunkte zur Topographiebestimmung herangezogen, indem lediglich helle Flächen im Bild detektiert und ausgewertet werden. Dies hat keinen Informationsverlust bezüglich lateraler und vertikaler Auflösung zur Folge, verringert jedoch die Rechenzeit für die Bestimmung der Topographie. Für die Bestimmung der hellen Flächen werden parallele Linien durch das Bild gelegt und das Intensitätsprofil entlang dieser Linien ausgewertet. Aus den eindimensionalen Intensitätsprofilen wird die Ausdehnung und maximale Intensität der hellen Flächen ermittelt. Durch einen Vergleich mit Werten aus einer Simulationsrechnung kann dann die Tiefe und Breite von Defekten auf der Oberfläche bestimmt werden.

Die Aufgabe der vorliegenden Erfindung besteht darin, ein Verfahren zur Bestimmung von Oberflächendefekten einer ebenen Oberfläche anzugeben, das die Genauigkeit in der Bestimmung der Oberflächendefekte nochmals erhöht.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren erfolgt die Bestimmung der Oberflächendefekte, indem die Oberfläche mit einer ebenen Wellenfront beleuchtet und ein Bild der beleuchteten Oberfläche bzw. der von der Oberfläche reflektierten Wellenfront aufgezeichnet wird. Das Bild enthält somit Information über die Änderung der an der Oberfläche reflektierten ebenen Wellenfront. Die Oberflächendefekte werden dann durch Analyse der Intensitätsverteilung im aufgezeichneten Bild bestimmt. Bei dieser Analyse werden lediglich helle Flächen im Bild detektiert und ausgewertet, wobei für die Detektion der hellen Flächen Intensitätsprofile in zwei Dimensionen des Bildes ausgewertet werden.

Durch dieses Verfahren wird einerseits eine hohe laterale Auflösung durch die bereits beschriebene Technik der Bestimmung der Topographie anhand der Intensitätsverteilung des aufgezeichneten Makyoh-Bildes erreicht. Andererseits werden durch die Bestimmung der hellen Flächen in zwei Dimensionen Fehler vermieden, wie sie bei der Bestimmung aus den eindimensionalen Intensitätsprofilen gemäß dem oben genannten Stand der Technik auftreten können. Hierbei wurde erkannt, dass die Bestimmung der hellen Flächen mittels eindimensionaler Intensitätsprofile anhand paralleler Linien durch das Bild dazu führen kann, dass größere Defekte mehrmals als voneinander unabhängige kleinere Defekte detektiert werden. Dies führt zur Fehlbestimmung der Kennwerte dieser Defekte. Durch die Bestimmung der hellen Flächen in zwei Dimensionen des Bildes wird die Gefahr einer derartigen Fehlbestimmung vermieden oder zumindest deutlich verringert. Die Genauigkeit in der Bestimmung der Oberflächendefekte wird damit erhöht.

Für die Bestimmung der Intensitätsprofile in zwei Dimensionen können bspw. einfache parallele Linien horizontal und vertikal, d. h. in den gewünschten zwei Dimensionen, über das aufgenommene Bild gelegt und die Intensitätsverteilungen entlang dieser Linien ermittelt werden. Durch die Kombination dieser Intensitätsverteilungen können dann die hellen Flächen mit hoher Genauigkeit ermittelt und Länge und Breite der hellen Flächen berechnet werden. Auch bereits vorhandene Algorithmen zur Bestimmung von hellen Flächen bzw. Bereichen in einem Bild können eingesetzt werden. Bei diesen Algorithmen werden Bereiche mit höherer Intensität detektiert und sowohl die Mittelpunkte als auch Breite und Länge der Flächen anhand der zweidimensionalen Intensitätsverteilung berechnet.

Für die Bestimmung der Oberflächendefekte werden beim vorgeschlagenen Verfahren vorzugsweise die maximale Intensität sowie der Durchmesser (im Falle von annähernd kreisförmigen Flächen) oder die Länge und Breite der jeweiligen Fläche ermittelt. Aus diesen Werten kann dann auf die Ausdehnung des jeweiligen Defektes, insbesondere dessen Durchmesser und Tiefe zurück geschlossen werden. Dies erfolgt vorzugsweise durch Vergleich mit Simulationsergebnissen, bei denen die Reflexion einer ebenen Wellenfront an Oberflächen mit unterschiedlichsten Defektparametern bzw. -kennwerten (insbesondere unterschiedlichem Durchmesser und unterschiedlicher Tiefe) rechnerisch simuliert wurde. In dem durch die Simulation erhaltenen Makyoh-Bild werden dann die Intensität und Größe der hellen Flächen ermittelt und den jeweiligen Defekten zugeordnet. Aus dieser Zuordnung kann bspw. eine Tabelle erstellt werden, in der Kombinationen aus maximaler Intensität und Durchmesser bzw. Länge/Breite der jeweiligen hellen Fläche den Parametern des jeweils verursachenden Defektes zugeordnet sind. Alternativ kann hierzu auch eine Diagramm-Darstellung herangezogen werden, in der die Intensität gegen den Durchmesser der hellen Fläche für unterschiedliche Defekttiefen aufgetragen ist, wobei bspw. der Defektdurchmesser zusätzlich farbig codiert sein kann. Eine derartige Darstellung ist bspw. aus der in der Einleitung genannten Veröffentlichung von I. Lazareva et al. bekannt. Mit einer derartigen Technik können dann bspw. die Tiefe und der Durchmesser oder die Tiefe und die Breite und Länge der jeweiligen Oberflächendefekte bestimmt werden, die zu der detektierten hellen Fläche mit der zugehörigen maximalen Intensität und Ausdehnung führen. Auch die Anzahl und/oder Verteilung der Oberflächendefekte auf der Oberfläche kann mit dem vorgeschlagenen Verfahren ermittelt werden. Hierzu ist keine Vermessung der Ausdehnung oder Bestimmung der Intensitätswerte sondern lediglich die Erkennbarkeit der Position der detektierten Flächen erforderlich.

Mit dem Verfahren lassen sich flache reflektierende Probenoberflächen mit hoher Genauigkeit vermessen. Dies können bspw. Halbleiterscheiben, spiegelnde Metalloberflächen oder Spiegel sein. Das Verfahren ermöglicht die Vermessung von Scheiben bei einem Polierprozess, bspw. als in die Poliermaschine integrierte Messtechnik, zur Bestimmung des Endpunktes und der Qualität des Polierprozesses und der polierten Proben oder ähnliches. Unter Verwendung einer idealen Probe (sehr defektarm) können optische Komponenten vermessen werden, die als Teil des Aufbaus genutzt werden, bspw. Linsen, Spiegel, Strahlteiler usw. Auch strukturierte Oberflächen, bspw. im Bereich der IC- oder MEMS-Fertigung, können mit dem Verfahren vermessen werden.

### Kurze Beschreibung der Zeichnungen

Das vorgeschlagene Verfahren und mögliche Anordnungen zur Durchführung des Verfahrens werden nachfolgend anhand von Ausführungsbeispielen in Verbindung mit den Zeichnungen nochmals näher erläutert. Hierbei zeigen:
- Fig. 1: ein erstes Beispiel für einen Aufbau zur Bestimmung von Oberflächendefekten mit dem vorgeschlagenen Verfahren;
- Fig. 2: ein zweites Beispiel für einen Aufbau zur Bestimmung von Oberflächendefekten mit dem vorgeschlagenen Verfahren;
- Fig. 3: ein drittes Beispiel für einen Aufbau zur Bestimmung von Oberflächendefekten mit dem vorgeschlagenen Verfahren;
- Fig. 4: zwei Beispiele für die Belegung eines Probenhalters mit mehreren Proben, wie er in den Aufbauten der Figuren 1 bis 3 eingesetzt werden kann;
- Fig. 5: einen vergrößerten Ausschnitt einer Intensitätsverteilung in einem Makyoh-Bild (a) sowie zur Veranschaulichung zwei Möglichkeiten zur Detektion heller Flächen im Bild (b, c);
- Fig. 6: ein Beispiel für ein eindimensionales Intensitätsprofil entlang einer Linie durch das Makyoh-Bild;
- Fig. 7: ein Beispiel für die Vermessung eines Intensitäts-Peaks aus dem Profil der Figur 6;
- Fig. 8: eine Darstellung zur Veranschaulichung einer Simulation für die Bestimmung der Oberflächendefekte; und
- Fig. 9: ein Diagramm zur Veranschaulichung der Simulationsergebnisse.

### Wege zur Ausführung der Erfindung

Für die Durchführung des vorgeschlagenen Verfahrens sind die Vermessung der Probenoberfläche mittels ebener Wellen sowie die Aufzeichnung der reflektierten ebenen Wellenfront erforderlich.

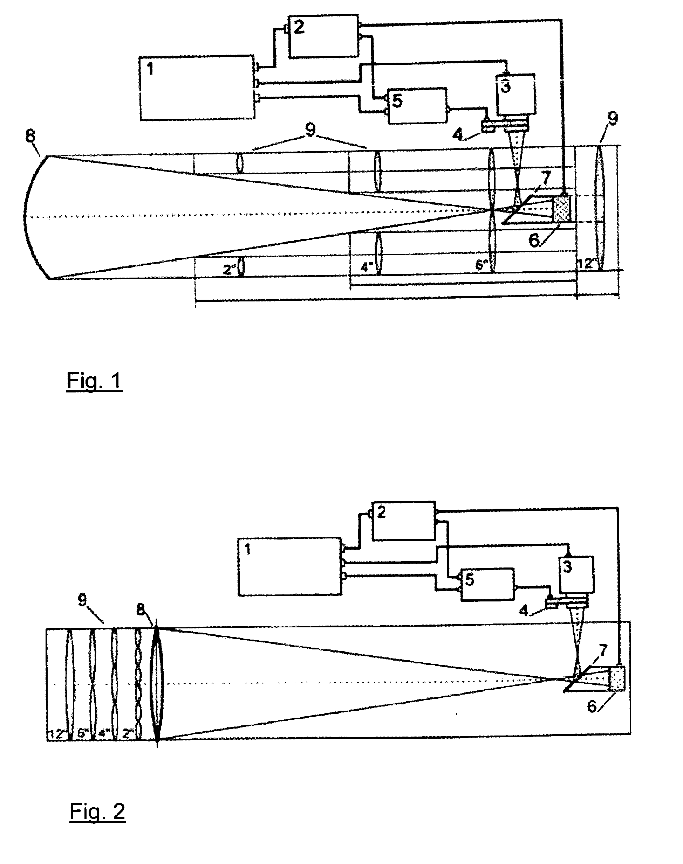

Beispiele für einen apparativen Aufbau zur Ermittlung der Intensitätsverteilungen sind in den Figuren 1 bis 3 dargestellt. Dort wird ein Lichtstrahl von einer Lichtquelle 6 emittiert und über einen Kollimator 8 als ebene Welle auf die Probe 9 gerichtet.

Die an der Probenoberfläche reflektierte ebene Welle wird über den Strahlteiler 7 ausgekoppelt und trifft auf eine CCD-Kamera 3. Vor der CCD-Kamera 3 ist ein Drehtisch für das Objektiv (motorisierter Halter) angeordnet. Dieser Drehtisch wird über einen Controller 5 gesteuert. Ein Rechner 1 übernimmt die Steuerung der gesamten Bildaufzeichnung inkl. der Ansteuerung des Controllers 5 sowie der Stromquelle 2 für den Controller und die Lichtquelle. Der Rechner 1 erhält von der CCD-Kamera 3 auch die aufgezeichnete Bildinformation und wertet diese gemäß dem hier vorgeschlagenen Verfahren aus. Das Auswerteergebnis, insbesondere die Anzahl, Dichte, Tiefe und Größe (Breite/Länge) der einzelnen Defekte werden vom Rechner 1 abgespeichert und/oder an einem Monitor dargestellt.

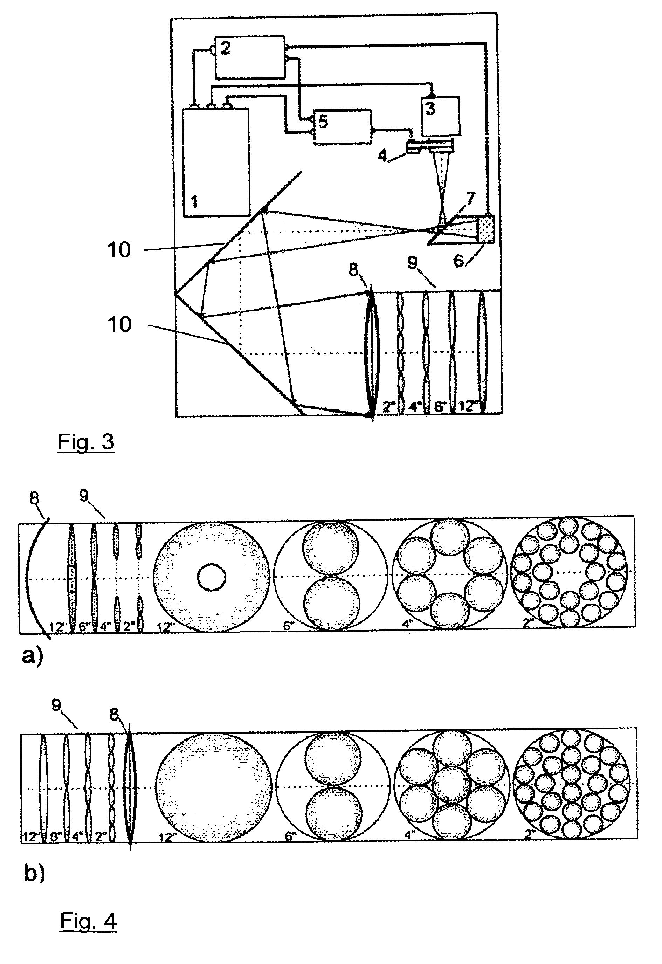

Bei dem Beispiel der Figur 1 wird für die Erzeugung der ebenen Wellenfront ein Parabolspiegel (hier: 300 mm Durchmesser) als Kollimator 8 verwendet. Die Nutzung des Parabolspiegels anstelle einer Linse gleichen Durchmessers, wie in den Ausgestaltungen der Figuren 2 und 3, bietet eine flexiblere Lösung, da die zu messende Probe 9 auf verschiedenen Positionen vor dem Spiegel installiert werden kann. In der Figur 1 sind hierbei beispielhaft unterschiedliche Positionen angedeutet. Ein geringerer Probenabstand verbessert die Auflösung. Um in der abbildenden Optik den Strahlengang nicht abzuschatten, sollten für Proben unterschiedlicher Größe auch verschiedene Abstände zum Kollimator 8 verwendet werden. Je kleiner die Probengröße ist, desto näher kann die Probe an den Parabolspiegel gebracht werden. Bei einem Probenabstand, der genau dem Brennpunkt des Kollimatorspiegels entspricht, können in diesem Beispiel Proben bis zu einem Durchmesser von maximal 150 mm gemessen werden. Ein Anbringen der zu messenden Probe hinter die Lichtquelle 6 bietet die Möglichkeit, auch Proben mit Durchmessern größer 150 mm zu vermessen. Hierbei wird jedoch ein Teil der Probe durch die Lichtquelle verdeckt.

Dieses Problem kann durch Verwendung einer Linse gleichen Durchmessers anstelle des Parabolspiegels als Kollimator 8 gelöst werden, wie dies in der Figur 2 schematisch angedeutet ist. In diesem Fall befinden sich die Proben 9 direkt hinter der Kollimatorlinse, wobei auch hier unterschiedliche Abstände zur Kollimatorlinse sowie eine unterschiedliche Anzahl von Proben gleichzeitig vermessen werden können, wie dies in der Figur angedeutet ist. Mit diesem Aufbau können die Proben auch ganzflächig bis zu einer Größe von 300 mm vermessen werden. Weiterhin lässt sich die Größe des Aufbaus auch durch den Einsatz von zwei flachen Spiegeln 10 in der Länge reduzieren, wie dies in der Figur 3 angedeutet ist. Dadurch wird der Strahlengang zur optischen Abbildung gefaltet.

Für Proben mit kleinerem Durchmesser, z. B. von kleiner als 150 mm, kann dennoch ein Probenhalter mit einem Durchmesser von 300 mm verwendet werden. Dieser kann dann mit mehreren Proben 9 bestückt werden, wie dies in der Figur 4 veranschaulicht ist. Je kleiner der Probendurchmesser, desto mehr Proben können gleichzeitig in den Probenhalter eingesetzt und vermessen werden. Figur 4a zeigt hierbei eine mögliche Belegung des Probenhalters mit einer, zwei, sechs oder zweiundzwanzig Proben bei einem Aufbau gemäß Figur 1. Die Mitte des Probenhalters muss frei gehalten werden, da der Probenhalter in diesem Beispiel vor der Lichtquelle montiert ist. Dies ist bei dem Aufbau der Figuren 2 und 3 nicht erforderlich, wie dies in der Figur 4b angedeutet ist.

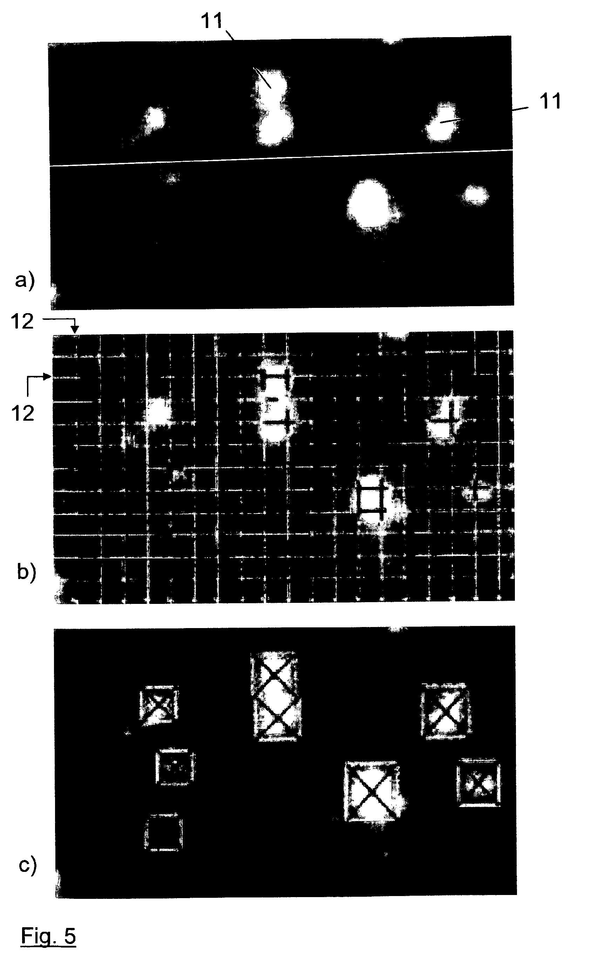

Das vorgeschlagene Verfahren der Auswertung des mit der Vorrichtung gemäß den Figuren 1 bis 3 aufgezeichneten Makyoh-Bildes wird im Folgenden beschrieben. Die Intensitätsverteilung einer ursprünglich ebenen Wellenfront nach der Reflexion an der zu untersuchenden Oberfläche, bspw. einer Siliziumscheibe, zeigt starke Unterschiede zwischen den verschiedenen Bereichen der Probenoberfläche. Unebenheiten bewirken eine Veränderung der Lichtintensität in der Reflexion einer ursprünglich homogen beleuchteten Oberfläche. Konvexe Bereiche der Oberfläche verringern die Intensität. Konkave Bereiche erhöhen dagegen die Intensität. Figur 5a zeigt hierbei einen vergrößerten Ausschnitt der Intensitätsverteilung eines Makyoh-Bildes, in dem unterschiedliche helle Flächen 11 erkennbar sind. Bei dem vorgeschlagenen Verfahren wird das Makyoh-Bild hinsichtlich dieser hellen Flächen analysiert, die konkaven Defekten auf der untersuchten Probenfläche entsprechen.

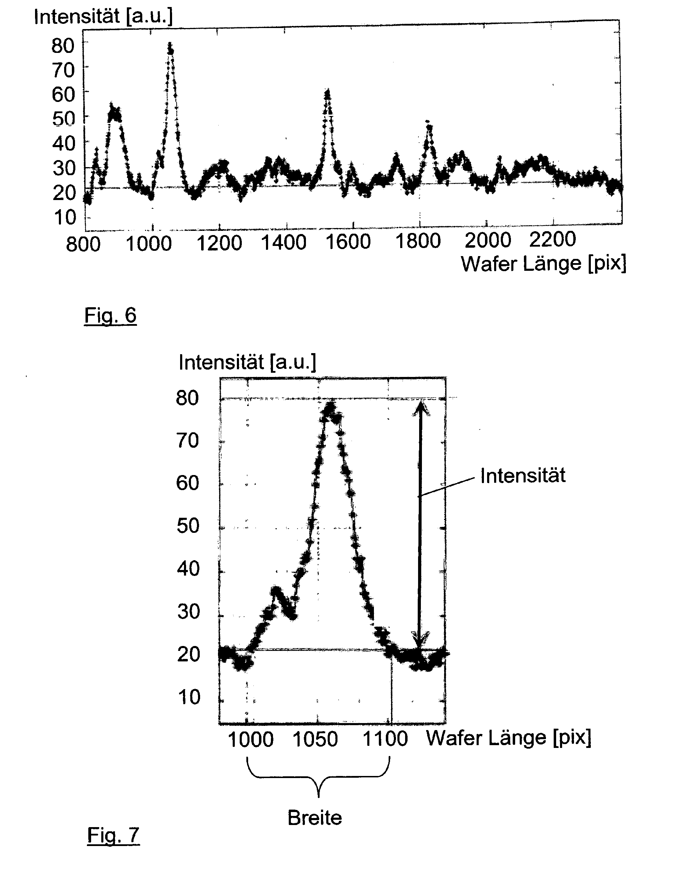

Zur Detektion der hellen Flächen können unterschiedliche Verfahren eingesetzt werden. Eine Möglichkeit besteht in der Analyse von Intensitätsprofilen entlang festgelegter Linien 12, die horizontal und vertikal über das aufgenommene Bild verteilt sind. Der Abstand dieser Linien wird entsprechend der gewünschten Auflösung gewählt. Ein Beispiel hierfür ist in Figur 5b angedeutet. Figur 6 zeigt ein Intensitätsprofil entlang einer derartigen Linie mit mehreren Intensitätspeaks unterschiedlicher Breite, die den einzelnen hellen Flächen des Makyoh-Bildes entsprechend, durch die die Linie verläuft. Eine weitere Möglichkeit der Detektion der hellen Flächen bieten bereits existierende Programme, wie bspw. integrierte Funktionen in MatLab (z. B. bwraceboundary, bwboundaries, usw.). Hier werden die hellen Flächen bzw. Bereiche 11 höherer Intensität detektiert und sowohl die Mittelpunkte als auch Breite und Länge der Flächen automatisch berechnet. Dies ist in Figur 5c angedeutet.

Der nächste Schritt besteht in der Aufteilung der detektierten hellen Flächen nach Intensität und Länge/Breite-Parameter. Die nach diesem Schritt erhaltene Tabelle zeigt die Anzahl der hellen Flächen des gesamten Makyoh-Bildes mit dem jeweiligen Länge/Breite-Parameter X und der maximalen Intensität Y. Ein Beispiel hierfür ist in Tabelle 1 gegeben.

**Tabelle 1**

| Intensität [a.u.]_{↓} | Länge [pix] → | **100** | **150** | **200** | **250** |
|---|---|---|---|---|---|
| **25** | | 5 | 2 | 0 | 2 |
| **50** | | 8 | 0 | 3 | 0 |
| **75** | | 0 | 2 | 0 | 0 |
| **100** | | 12 | 0 | 0 | 0 |

Die linke Spalte zeigt die maximale Intensität Y des Bereiches, die oberste Zeile zeigt die Länge/Breite X des Bereiches. In diesem Beispiel wurden z.B. drei Bereiche auf dem Makyoh-Bild gefunden, die eine Intensität von 50 a.u. (arbitrary units) und eine Länge von 200 Pixeln aufweisen. Hierbei wurde zur Vereinfachung angenommen, dass die Flächen in Länge und Breite symmetrisch sind, so dass Länge gleich Breite. In anderen Fällen werden Länge und Breite getrennt in der Tabelle angeführt.

Um anhand dieser Tabelle die korrespondierenden Defektwerte zu berechnen ist ein weiterer Berechnungsalgorithmus erforderlich. Dieser simuliert die reflektierten Lichtstrahlen für verschiedene Breiten bzw. Tiefen der konkaven Bereiche der Oberfläche und für verschiedene Probe-Kamera Abstände. Daraus wird eine Berechnungstabelle oder eine Berechnungsgraphik ermittelt, mit deren Hilfe Defektparameter aus den Intensitätspeaks und Abmessungen der hellen Flächen bestimmt werden können. Figur 7 zeigt vergrößert einen Intensitätspeak aus Figur 6 mit einer Lichtintensität von ca. 60 a.u. und einer Länge/Breite von ca. 100 Pixeln. Dieser Wert soll nun mit einem Simulationsergebnis verglichen werden, um daraus die Parameter des zugrunde liegenden Defektes der Probenoberfläche zu bestimmen.

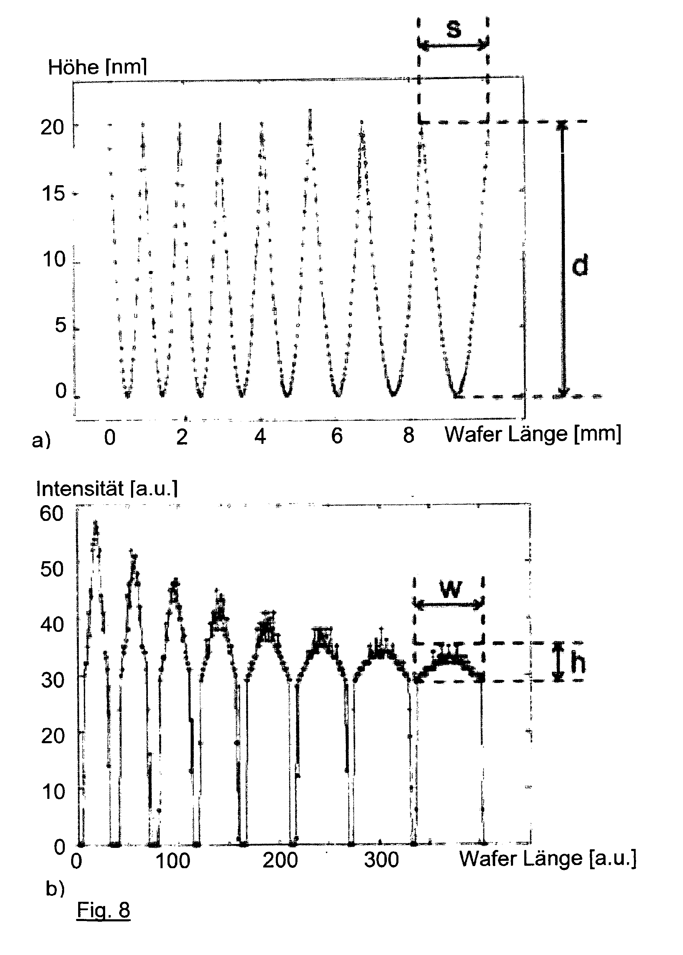

Figur 8 veranschaulicht den eingesetzten Simulationsalgorithmus. In Figur 8a ist hierzu die für die Simulation vorgegebene Probenoberfläche dargestellt. Als Profil wurden hier konkave Bereiche mit anwachsender Breite s und einer konstanten Tiefe d von 20 nm gewählt. Figur 8b zeigt das aus der Simulation des reflektierten Lichts resultierende Intensitätsprofil des Makyoh-Bildes bei einem Probe-Kamera Abstand L von 1 m. Die Parameter der resultierenden Intensitätspeaks (maximale Intensität h und Peakbreite w) werden dann mit den zugehörigen Defektparametern (Defekttiefe d und Defektbreite s) in einer Berechnungstabelle zusammengefasst.

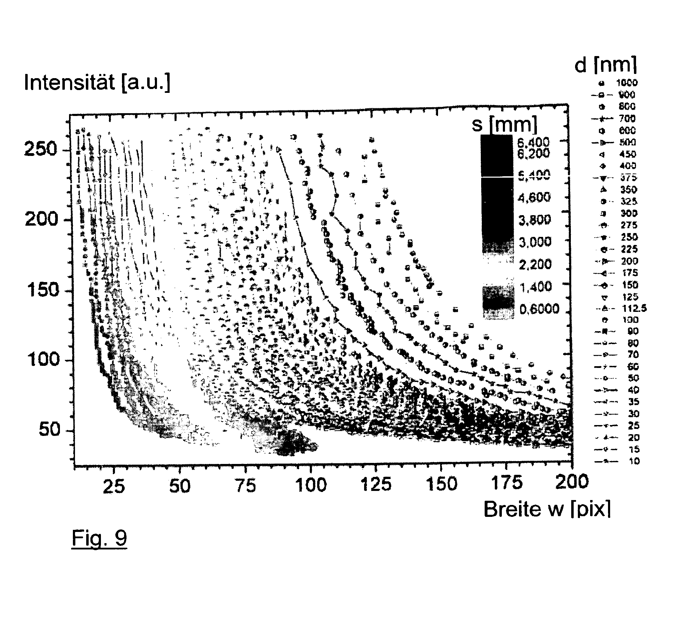

Die Simulation wird für unterschiedliche Parameter d und s durchgeführt, so dass Defekte mit einer Tiefe d im Bereich 10 nm bis 1 µm und verschiedener Breite s bestimmt werden können. Figur 9 veranschaulicht die Simulationsergebnisse und den Zusammenhang zwischen (d, s) und (h, w) Parametern. Für vorgegebene Parameter (d, s) sind die simulierten Parameter (h, w) im Diagramm der Figur 9 zu finden. Die unterschiedlichen Tiefen sind dabei in dem Diagramm mit den unterschiedlichen Zeichen repräsentiert, die unterschiedlichen Defektbreiten mit unterschiedlichen Farben, was in der einfarbigen Darstellung der Figur 9 allerdings nicht ersichtlich ist. Für den Intensitätspeak aus Figur 7 (h = 60 a.u. und w = 100 Pixel) ergibt sich in diesem Beispiel eine Defekttiefe d von 125 nm und eine Defektbreite s von 3,8 mm. Die Graphiken sind hier nur zum besseren Verständnis des Algorithmus angeführt. Der Algorithmus selbst ermittelt die Defekte direkt über eine Berechnungstabelle, ermittelt somit aus den Makyoh-Bild Parametern (h, w) die Defektparameter (d, s) und bestimmt die Defektverteilung auf der Probenoberfläche. Die Berechnung dieser Defektverteilung ermöglicht bei vorgegebenem Auswahlkriterium auf einfache Weise eine schnelle Überprüfung der Probenqualität und eine Probenauswahl.

In dem vorliegenden Beispiel wurde jeweils nur auf die Defektbreite w eingegangen, die für viele Anwendungen ausreichend ist. Selbstverständlich lassen sich auch Länge und Breite der jeweiligen Flächen getrennt ermitteln und jeweils einer Länge und Breite eines zugrunde liegenden Defektes zuordnen. Dies erfordert die entsprechende Simulation mit getrennten Werten von Länge und Breite.

Mit nur einer einzigen Kameraaufnahme eines Makyoh-Bildes können bei dem vorgeschlagenen Verfahren eine oder mehrere Proben auf Anzahl und Größe von Oberflächendefekten untersucht werden. Da bei dem Verfahren nur Bereiche mit erhöhter Intensität untersucht werden, kommt es zu einer starken Reduzierung der benötigten Rechenzeit. Je weniger Defekte auf der Probe vorhanden sind, desto kürzer ist die Rechenzeit. Typische Rechenzeiten für eine Probe mit 150 mm Durchmesser liegen je nach gewünschter lateralen Auflösung zwischen einer Sekunde und zehn Sekunden.

### Bezugszeichenliste

- 1: Rechner
- 2: Stromquelle
- 3: CCD-Kamera
- 4: Drehtisch für das Objektiv
- 5: Controller für den Drehtisch
- 6: Lichtquelle
- 7: Strahlteiler
- 8: Kollimator
- 9: Probe
- 10: Spiegel
- 11: helle Bereiche bzw. Flächen
- 12: Linien

## Patentansprüche

1. Verfahren zur Bestimmung von Oberflächendefekten einer ebenen Oberfläche (9), bei der
- die Oberfläche (9) mit einer ebenen Wellenfront beleuchtet und ein Bild der von der Oberfläche (9) reflektierten Wellenfront aufgezeichnet wird, und
- die Oberflächendefekte durch Analyse einer Intensitätsverteilung des aufgezeichneten Bildes bestimmt werden,
- wobei bei der Analyse der Intensitätsverteilung lediglich helle Flächen (11) im Bild detektiert und ausgewertet werden,
**dadurch gekennzeichnet,**
**dass** für die Detektion der hellen Flächen (11) Intensitätsprofile in zwei Dimensionen des Bildes ausgewertet werden.

2. Verfahren nach Anspruch 1,
**dadurch gekennzeichnet,**
**dass** für die Bestimmung der Oberflächendefekte eine maximale Intensität und ein Durchmesser im Falle kreisförmiger Flächen oder eine maximale Intensität und eine Breite und Länge jeder hellen Fläche (11) ermittelt werden.

3. Verfahren nach Anspruch 1 oder 2,
**dadurch gekennzeichnet,**
**dass** die Bestimmung der Oberflächendefekte durch Vergleich mit Simulationsergebnissen erfolgt.

4. Verfahren nach Anspruch 3,
**dadurch gekennzeichnet,**
**dass** durch den Vergleich mit den Simulationsergebnissen eine Tiefe und ein Durchmesser im Falle kreisförmiger Flächen oder eine Tiefe und eine Breite und Länge der Oberflächendefekte ermittelt werden.

5. Verfahren nach einem der Ansprüche 1 bis 4,
**dadurch gekennzeichnet,**
**dass** eine Anzahl und/oder Verteilung der Oberflächendefekte auf der Oberfläche (9) ermittelt wird.

6. Verfahren nach einem der Ansprüche 1 bis 5,
**dadurch gekennzeichnet,**
**dass** die Detektion der hellen Flächen (11) über äquidistante Linien (12) erfolgt, die senkrecht zueinander über das Bild gelegt werden, wobei die eindimensionalen Intensitätsprofile entlang jeder der Linien (12) bestimmt werden.

7. Verfahren nach einem der Ansprüche 1 bis 5,
**dadurch gekennzeichnet,**
**dass** die Detektion der hellen Flächen (11) über einen Algorithmus erfolgt, der zusammenhängende Gebiete im Bild ermittelt, deren Intensitätswerte oberhalb eines Schwellwertes liegen.
